# EUROPEAN PATENT SPECIFICATION

(11) **EP 2 143 622 B1**
(45) Date of publication and mention of the grant of the patent: **21.03.2012**
(21) Application number: 09706194.9
(22) Date of filing: 20.01.2009
(51) Int. Cl.: B62D 31/00, B62D 29/00

(54) **INTEGRATED COMPOSITE-MATERIAL VEHICLE BODY FOR A TRANSPORTATION VEHICLE, AND A PRODUCTION METHOD THEREFOR**
INTEGRIERTE VERBUNDMATERIAL-FAHRZEUGKAROSSERIE FÜR EIN TRANSPORTFAHRZEUG UND HERSTELLUNGSVERFAHREN DAFÜR
CARROSSERIE DE VEHICULE EN MATERIAU COMPOSITE POUR VEHICULE DE TRANSPORT ET PROCEDE DE PRODUCTION CORRESPONDANT

(30) Priority: 31.01.2008 KR 20080009979
(43) Date of publication of application: 13.01.2010
(73) Proprietor: Hankuk Fiber Glass Co., Ltd., Gyeongsangnamdo 627-852 (KR)
(72) Inventor: CHO, Yong Jun, Miryang-si Gyeongsangnamdo 627-852 (KR); AN, Chee Woon, Miryang-si Gyeongsangnamdo 627-759 (KR); KIM, Tae Kyong, Busan 616-120 (KR)
(74) Representative: Maser, Jochen
(86) International application number: PCT/KR2009/000289
(87) International publication number: WO 2009/096676

(56) References cited:
- WO-A1-2007/054671
- WO-A1-2008/002838
- WO-A1-2008/067583
- JP-A- 8 156 712
- KR-A- 20040 065 533
- US-A- 5 690 378

## Description

### [Technical Field]

The present invention relates to an integrated composite-material vehicle body with a good surface state manufactured by a simultaneous curing method using a composite material, and to a production method therefor.

### [Background Art]

In general, a vehicle body for transport vehicles, such as buses or trains, is formed in such a way that the side shell, the front shell, the rear shell and the ceiling shell are mechanically joined or welded to a frame. The mechanical joining and welding techniques are labor-intensive and takes much production time. Joined parts through the mechanical joining need repair and may cause noise and be exposed to insulation since joining tools are loosened as time goes by. Moreover, welded parts may be weaken and easily break as time goes by.

As another technique, there is a method to bond a shell of each part to the frame, but it has various merits and demerits in comparison with the mechanical joining method and the welding method. Such a method has several problems in that it takes much time to bond, in that there is a need to review reliability of bonding strength in the shell of each part, and in that the lightweight efficiency is weak.

As a technology according to a prior art, an integrated composite-material vehicle body includes an outer skin material, a frame, a core material, and an outer skin material. In case where the vehicle body is manufactured by a simultaneous curing method, since the outer skin material and the inner skin material are respectively made using flexible prepregs at the beginning of molding, in the course of vacuum autoclave molding, if a honeycomb core is used as the core material, the outer skin material and the inner skin material are sucked into a honeycomb space, and it causes a bad surface.

The US 5,690,370 discloses an integrated composite-material vehicle body for a transportation vehicle, which is obtained by integral forming in the shape of the vehicle body using a sandwich panel. This sandwich panel comprises a core material, an inner skin material which is made using a prepreg of reinforcing fibres impregnated with a synthetic resin and semi-cured, and which is adhered to a side of the core material and further comprises an outer skin material, which is made using a prepreg of reinforcing fibres impregnated with a synthetic resin and semi-cured and which is adhered to the other side of the core material.

In order to solve the above problems of the prior arts, the vehicle bodies according to the prior arts are manufactured through the steps of laminating and curing the outer skin material, inserting the frame and the core material using an adhesive sheet, and laminating and curing the inner skin material.

Accordingly, molded products using the composite material have a problem in that it is difficult in commercialization and expensive despite their excellent characteristics due to their expensive manufacturing costs. Furthermore, the molded product using the composite material has another problem in that the surface of the product is bad and even the next painting process requires significant costs since there is no technology of the simultaneous curing method.

### [Disclosure]

### [Technical Problem]

Accordingly, the present invention has been made in an effort to solve the above-mentioned problems occurring in the prior arts, and it is an object of the present invention to provide an integrated composite-material vehicle body, which is reduced in a manufacturing period of time and manufacturing costs, and has a good surface state by being manufactured by a simultaneous curing method.

### [Technical Solution]

To accomplish the above object, according to the present invention, there is provided an integrated composite-material vehicle body with a good surface state by being manufactured through the steps of using an outer skin material that a sheet metal plate is adhered to or inserted into a composite material, laminating a core material and an inner skin material, and curing them simultaneously.

That is, in an aspect of the present invention, there is an integrated composite-material vehicle body for transport vehicles, which is obtained by integral forming in the shape of the vehicle body, using a sandwich panel comprising: a core material; an inner skin material which is made using a prepreg of reinforcing fibres impregnated with a synthetic resin and semi-cured, and which is adhered to one side of the core material; an outer skin material which is made using a prepreg of reinforcing fibres impregnated with synthetic resin and semi-cured, and which is adhered to the other side of the core material; and a sheet metal material which is inserted between the core material and the outer skin material.

In this instance, the sheet metal material includes a plurality of holes formed therein.

As another aspect of the present invention, provided is an integrated composite-material vehicle body for a transportation vehicle, which is obtained by integral forming in the shape of the vehicle body, using a sandwich panel comprising: a core material; an inner skin material which is made using a prepreg of reinforcing fibres impregnated with a synthetic resin and semi-cured, and which is adhered to one side of the core material; an outer skin material which is made using a plurality of prepregs of reinforcing fibres impregnated with synthetic resin and semi-cured, and which is adhered to the other side of the core material; and a sheet metal material which is inserted between the plural prepregs constituting the outer skin material.

In this instance, the sheet metal material comprises a plurality of holes formed therein.

As a further aspect of the present invention, provided is a method of producing an integrated composite-material vehicle body for a transportation vehicle, comprising the steps of: producing a mold in the same form and size as the vehicle body in such a way that a front head part, a rear head part, a ceiling, and side parts of the vehicle body can be produced integrally; laminating an outer skin material, which is made using a prepreg of reinforcing fibres impregnated with synthetic resin and semi-cured, in the inside surface of the mold; laminating a sheet metal material or a porous sheet metal material on the inside surface of the outer skin material; laminating a core material on the inside surface of the sheet metal material; laminating an inner skin material, which is made using a prepreg of reinforcing fibres impregnated with synthetic resin and semi cured, on the inside surface of the core material; and molding the above laminated materials in an autoclave.

As a still further aspect of the present invention, provided is a method of producing an integrated composite-material vehicle body for a transportation vehicle, comprising the steps of: producing a mold in the same form and size as the vehicle body in such a way that a front head part, a rear head part, a ceiling, and side parts of the vehicle body can be produced integrally; laminating a first outer skin material, which is made using a prepreg of reinforcing fibres impregnated with matrix materials and semi-cured, on the inside surface of the mold; laminating a sheet metal material or a porous sheet metal material on the inside surface of the first outer skin material; laminating a second outer skin material, which is made using a prepreg of reinforcing fibres impregnated with synthetic resin and semi-cured, on the inside surface of the mold; laminating a core material on the inside surface of the second outer skin material; laminating an inner skin material, which is made using a prepreg of reinforcing fibres impregnated with synthetic resin and semi cured, on the inside surface of the core material; and molding the above laminated materials in an autoclave.

### [Advantageous Effects]

As described above, the present invention can solve the problems of the complexity in process and the badness of the surface state due to lack in technical skill of the simultaneous curing method.

Additionally, the present invention can enhance brittleness and fatigue characteristics of the composite material.

### [Description of Drawings]

FIG. 1 is a perspective view showing the overall appearance of a vehicle body cured simultaneously according to a preferred embodiment of the present invention.
FIG. 2 is a sectional view of the vehicle body cut along the line of A-A' of FIG. 1.
FIG. 3 is an enlarged sectional view of the area B of FIG. 2..
FIG. 4 is an enlarged sectional view showing a structure of a vehicle body cured simultaneously according to another preferred embodiment of the present invention.
FIG. 5 is a perspective view showing a laminated structure of a composite material according to a further preferred embodiment of the present invention.

### [Mode for Invention]

Reference will be now made in detail to the preferred embodiment of the present invention with reference to the attached drawings. While the invention has been described in connection with preferred embodiments, it is not intended to limit the scope of the invention to the particular embodiments.

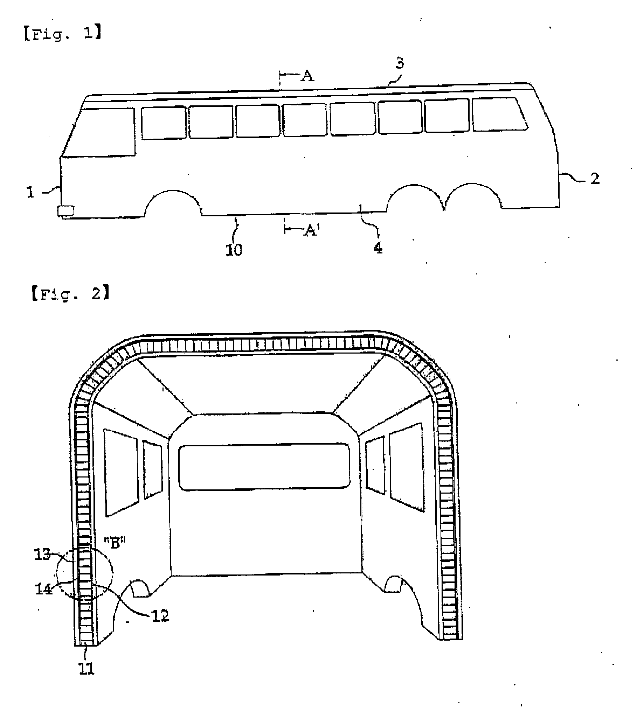

FIG. 1 is a perspective view showing the overall appearance of a vehicle body cured simultaneously according to a preferred embodiment of the present invention.

The integrated composite-material vehicle body according to the present invention is a structure effective to enhance the rigidity and insulation strength and reduce noise since a front head part 1, a rear head part 2, a ceiling 3 and a side part 4 have an integrated structure without any joint through the simultaneous curing method.

FIG. 2 is a sectional view of the vehicle body, which is cut along the line of A-A' of FIG. 1.

In FIG. 2, the integrated composite-material vehicle body 10 has a sandwich structure that honeycomb or foam is used as a core material 11, and in detail, has a configuration that an outer skin material 13, a sheet metal material 14, the core material 11, and an inner skin material 12 are laminated in order from the inside out.

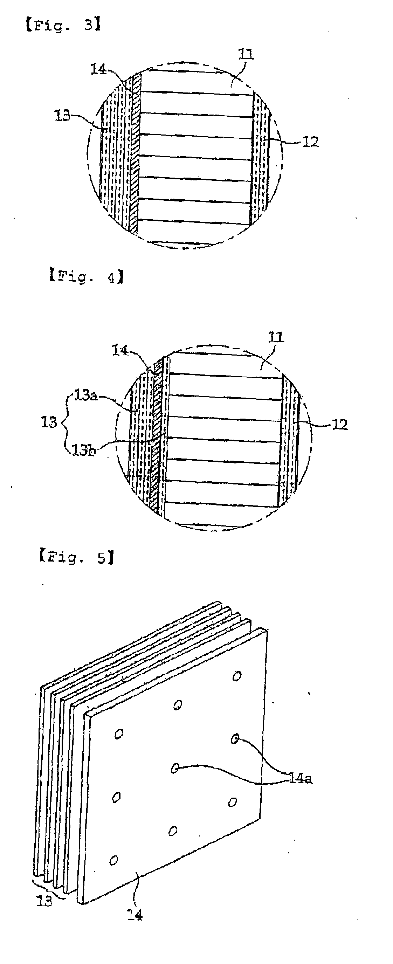

FIG. 3 is an enlarged sectional view of the area B of FIG. 2.

As shown in FIG. 3, the outer skin material 13 and the inner skin material 12 are made using a prepreg of reinforcing fibres impregnated with synthetic resin and semi-cured, and laminated in a single layer or a multi-layer in consideration of required strength and thickness.

In the present invention, synthetic resin impregnated in the prepreg is one selected from epoxy resin, phenol resin, unsaturated polyester resin, vinyl ester resin, melamine resin, urea resin, and so on, and the reinforcing fibres are one-way or two-way fabrics woven with carbon fiber, glass fiber, Kevlar fiber, boron fiber, and so on.

In order to enhance lightweight efficiency, insulation, soundproof, and rigidity of the structure, the core material 11 applied to the integrated composite-material vehicle body of the sandwich structure is made of one of various kinds of foam, such as urethane foam, PE foam, and PVC foam, one of various kinds of honeycomb, such as aluminum honeycomb and Nomex honeycomb, aluminum foam, and so on.

According to the prior arts, when the multi-component molding is carried out, the outer skin material is sunken into holes of the core material, under the influence of holes of the foam or holes of the honeycomb structure, which constructs the core material, and it causes a non-uniform surface, and accordingly, it requires lots of time and labor costs in the next painting process.

In the present invention, the sheet metal material 14 is interposed between the outer skin material 13 and the core material 11 or between first and second outer skin materials 13a and 13b constructing the outer skin material 13 as shown in FIG. 4 in such a way as to exist near to the core material 11. The sheet metal material 14 with a firm surface prevents that the prepreg is sunken to the core material 11 having holes for the lightweight efficiency to thereby remove the unsmooth surface.

The sheet metal material 14 is 10µm to 10mm in thickness and is made of steel, stainless steel, aluminum, copper, galvanized iron sheet, or the like.

FIG. 4 is an enlarged sectional view showing a structure of a vehicle body cured simultaneously according to another preferred embodiment of the present invention.

FIG. 4 illustrates an example that the sheet metal material 14 is interposed between the first and second outer skin materials 13a and 13b, and in this instance, it is preferable that the sheet metal material 14 is laminated near to the core material 11 and the first outer skin material 13a of the outer skin material 13 is thicker than the second outer skin material 13b.

The outer skin material 13, which is made using the composite material, and the sheet metal material 14 are used in a hybrid structure. The inner skin material 11 is located inside the integrated composite-material vehicle body, and it is advantageous not to use the sheet metal material 14 for the lightweight efficiency.

FIG. 5 is a perspective view showing a laminated structure of the composite material according to a further preferred embodiment of the present invention.

In FIG. 5, a sheet metal material 14 having a plurality of holes 14a formed therein. The holes 14a of the sheet metal material 14 serve to remove bubbles by inducing a free flow of resin generated due to rising of temperature during curing reaction.

A production method of the integrated composite-material vehicle body according to the present invention uses an autoclave device, which keeps a constant temperature and a constant pressure or adjusts changes in temperature and pressure at regular intervals.

First, it is preferable to laminate the outer skin material including the sheet metal material in a mold of a vehicle body shape and apply pressure in a vacuum condition to compress it. After the compression is released and the core material and the inner skin material are laminated on the inside surface of the outer skin material in order, they are wrapped with a bag and compressed again, and then, molded in an autoclave by the simultaneous curing method, whereby the integrated composite-material vehicle body with the uniform surface state cam be produced.

In detail, according to the preferred embodiment, first, produce a mold in the same form and size as the vehicle body in such a way that the front head part, the rear head part, the ceiling, and the side part constituting the vehicle body can be manufactured integrally.

Next, laminate the outer skin material, which is made using the prepreg of reinforcing fibres impregnated with synthetic resin and semi cured, on the inside surface of the mold.

After that, laminate the sheet metal material or the sheet metal material having the plural holes on the inside surface of the outer skin material.

Next, laminate the core material on the inside surface of the sheet metal material.

Next, laminate the inner skin material, which is made using the prepreg of reinforcing fibres impregnated with synthetic resin and semi cured, on the inside surface of the core material.

Finally, mold the above laminated materials in the autoclave.

As described above, the vehicle body according to the present invention is molded in such a way that the outer skin material, the sheet metal material, the core material and the inner skin material are laminated to the inside of the mold in order.

As another preferred embodiment, in the above-mentioned embodiment, the sheet metal material is located and laminated between outer skin materials, and then, the core material and the inner skin material are laminated in order and molded.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

### [Industrial Applicability]

As described above, the present invention provides the integrated composite-material vehicle body with a good surface state manufactured by the simultaneous curing method using the composite material and the method for producing the same, and the vehicle body and the production method according to the present invention can be widely used in manufacturing transport vehicles, such as trains, buses, and so on.

## Claims

1. An integrated composite-material vehicle body for a transportation vehicle, wherein it is obtained by integral forming in the shape of the vehicle body, using a sandwich panel comprising: a core material (11); an inner skin material (12) which is made using a prepreg of reinforcing fibres impregnated with a synthetic resin and semi-cured, and which is adhered to one side of the core material (11); an outer skin material (13) which is made using a prepreg of reinforcing fibres impregnated with synthetic resin and semi-cured, and which is adhered to the other side of the core material (11) **characterized in that** it further comprises a sheet metal material (14) which is inserted between the core material (11) and the outer skin material (13).

2. The integrated composite-material vehicle body according to claim 1, wherein the sheet metal material (14) comprises a plurality of holes (14a) formed therein.

3. An integrated composite-material vehicle body for a transportation vehicle, wherein it is obtained by integral forming in the shape of the vehicle body, using a sandwich panel comprising: a core material (11); an inner skin material (12) which is made using a prepreg of reinforcing fibres impregnated with a synthetic resin and semi-cured, and which is adhered to one side of the core material (11); an outer skin material (13) which is made using a plurality of prepregs of reinforcing fibres impregnated with synthetic resin and semi-cured, and which is adhered to the other side of the core material (11) **characterized in that** it further comprises a sheet metal material (14) which is inserted between the plural prepregs constituting the outer skin material (13).

4. The integrated composite-material vehicle body according to claim 3, wherein the sheet metal material (14) comprises a plurality of holes (14a) formed therein.

5. A method of producing an integrated composite-material vehicle body for a transportation vehicle, comprising the steps of:
producing a mold in the same form and size as the vehicle body in such a way that a front head part, a rear head part, a ceiling, and side parts of the vehicle body can be produced integrally;
laminating an outer skin material, which is made using a prepreg of reinforcing fibres impregnated with synthetic resin and semi-cured, in the inside surface of the mold;
laminating a sheet metal material or a porous sheet metal material on the inside surface of the outer skin material;
laminating a core material on the inside surface of the sheet metal material;
laminating an inner skin material, which is made using a prepreg of reinforcing fibres impregnated with synthetic resin and semi cured, on the inside surface of the core material; and
molding the above laminated materials in an autoclave.

6. A method of producing an integrated composite-material vehicle body for a transportation vehicle, comprising the steps of:
producing a mold in the same form and size as the vehicle body in such a way that a front head part, a rear head part, a ceiling, and side parts of the vehicle body can be produced integrally;
laminating a first outer skin material, which is made using a prepreg of reinforcing fibres impregnated with matrix materials and semi-cured, on the inside surface of the mold;
laminating a sheet metal material or a porous sheet metal material on the inside surface of the first outer skin material;
laminating a second outer skin material, which is made using a prepreg of reinforcing fibres impregnated with synthetic resin and semi-cured, on the inside surface of the mold;
laminating a core material on the inside surface of the second outer skin material;
laminating an inner skin material, which is made using a prepreg of reinforcing fibres impregnated with synthetic resin and semi cured, on the inside surface of the core material; and
molding the above laminated materials in an autoclave.

## Patentansprüche

1. Integrierte Verbundmaterial-Fahrzeugkarosserie für ein Transportfahrzeug, wobei diese durch Integralformen in der Gestalt der Fahrzeugkarosserie unter Verwendung einer Sandwichplatte gewonnen wird, welche umfasst: ein Kernmaterial (11); ein Innenhautmaterial (12), das unter Verwendung eines Prepregs aus kunstharzimprägnierten und halbausgehärteten Verstärkungsfasern gefertigt ist und an einer Seite des Kernmaterials (11) festgeklebt ist; ein Außenhautmaterial (13), das unter Verwendung eines Prepregs aus kunstharzimprägnierten und halbausgehärteten Verstärkungsfasern gefertigt ist und an der anderen Seite des Kernmaterials (11) festgeklebt ist, **dadurch gekennzeichnet, dass** sie weiterhin ein Blechmaterial (14) umfasst, das zwischen dem Kernmaterial (11) und dem Außenhautmaterial (13) eingefügt ist.

2. Integrierte Verbundmaterial-Fahrzeugkarosserie nach Anspruch 1, wobei das Blechmaterial (14) eine Mehrzahl von darin ausgebildeten Löchern (14a) umfasst.

3. Integrierte Verbundmaterial-Fahrzeugkarosserie für ein Transportfahrzeug, wobei diese durch Integralformen in der Gestalt der Fahrzeugkarosserie unter Verwendung einer Sandwichplatte gewonnen wird, welche umfasst: ein Kernmaterial (11); ein Innenhautmaterial (12), das unter Verwendung eines Prepregs aus kunstharzimprägnierten und halbausgehärteten Verstärkungsfasern gefertigt ist und an einer Seite des Kernmaterials (11) festgeklebt ist; ein Außenhautmaterial (13), das unter Verwendung einer Mehrzahl von Prepregs aus kunstharzimprägnierten und halbausgehärteten Verstärkungsfasern gefertigt ist und an der anderen Seite des Kernmaterials (11) festgeklebt ist, **dadurch gekennzeichnet, dass** sie weiterhin ein Blechmaterial (14) umfasst, das zwischen der Mehrzahl von Prepregs, die das Außenhautmaterial (13) bilden, eingefügt ist.

4. Integrierte Verbundmaterial-Fahrzeugkarosserie nach Anspruch 3, wobei das Blechmaterial (14) eine Mehrzahl von darin ausgebildeten Löchern (14a) umfasst.

5. Verfahren zur Herstellung einer integrierten Verbundmaterial-Fahrzeugkarosserie für ein Transportfahrzeug, welches die Schritte umfasst, dass:
eine Pressform in derselben Gestalt und Größe wie die Fahrzeugkarosserie auf solche Weise hergestellt wird, dass damit ein vorderes Kopfteil, ein hinteres Kopfteil, ein Dachteil und Seitenteile der Fahrzeugkarosserie einstückig hergestellt werden können;
ein Außenhautmaterial, das unter Verwendung eines Prepregs aus kunstharzimprägnierten und halbausgehärteten Verstärkungsfasern gefertigt ist, auf die Innenfläche der Pressform auflaminiert wird;
ein Blechmaterial oder ein poröses Blechmaterial auf die Innenfläche des Außenhautmaterials auflaminiert wird;
ein Kernmaterial auf die Innenfläche des Blechmaterials auflaminiert wird;
ein Innenhautmaterial, das unter Verwendung eines Prepregs aus kunstharzimprägnierten und halbausgehärteten Verstärkungsfasern gefertigt ist, auf die Innenfläche des Kernmaterials auflaminiert wird; und
die weiter oben laminierten Materialien in einem Autoklaven formgepresst werden.

6. Verfahren zur Herstellung einer integrierten Verbundmaterial-Fahrzeugkarosserie für ein Transportfahrzeug, welches die Schritte umfasst, dass:
eine Pressform in derselben Gestalt und Größe wie die Fahrzeugkarosserie auf solche Weise hergestellt wird, dass damit ein vorderes Kopfteil, ein hinteres Kopfteil, ein Dachteil und Seitenteile der Fahrzeugkarosserie einstückig hergestellt werden können;
ein erstes Außenhautmaterial, das unter Verwendung eines Prepregs aus mit Matrixmaterialien imprägnierten und halbausgehärteten Verstärkungsfasern gefertigt ist, auf die Innenfläche der Pressform auflaminiert wird;
ein Blechmaterial oder ein poröses Blechmaterial auf die Innenfläche des ersten Außenhautmaterials auflaminiert wird;
ein zweites Außenhautmaterial, das unter Verwendung eines Prepregs aus kunstharzimprägnierten und halbausgehärteten Verstärkungsfasern gefertigt ist, auf die Innenfläche der Pressform auflaminiert wird;
ein Kernmaterial auf die Innenfläche des zweiten Außenhautmaterials auflaminiert wird;
ein Innenhautmaterial, das unter Verwendung eines Prepregs aus kunstharzimprägnierten und halbausgehärteten Verstärkungsfasern gefertigt ist, auf die Innenfläche des Kernmaterials auflaminiert wird; und
die weiter oben laminierten Materialien in einem Autoklaven formgepresst werden.

## Revendications

1. Carrosserie de véhicule monobloc en matériau composite pour un véhicule de transport, celle-ci étant obtenue par moulage en une seule pièce dans la forme de la carrosserie de véhicule en utilisant un panneau sandwich, ladite carrosserie comprenant: un matériau (11) constituant le noyau; un matériau (12) constituant l'enveloppe intérieure lequel est réalisé en utilisant un prépreg en fibres de renforcement imprégnées de résine synthétique et semi-durcies et est collé sur un côté du matériau (11) constituant le noyau; un matériau (13) constituant l'enveloppe extérieure lequel est réalisé en utilisant un prépreg en fibres de renforcement imprégnées de résine synthétique et semi-durcies et est collé sur l'autre côté du matériau (11) constituant le noyau, **caractérisée en ce qu'**elle comprend en outre une plaque métallique (14) qui est insérée entre le matériau (11) constituant le noyau et le matériau (13) constituant l'enveloppe extérieure.

2. Carrosserie de véhicule monobloc en matériau composite selon la revendication 1 dans laquelle la plaque métallique (14) comprend une pluralité de trous (14a) ménagés dans celle-ci.

3. Carrosserie de véhicule monobloc en matériau composite pour un véhicule de transport, celle-ci étant obtenue par moulage en une seule pièce dans la forme de la carrosserie de véhicule en utilisant un panneau sandwich, ladite carrosserie comprenant: un matériau (11) constituant le noyau; un matériau (12) constituant l'enveloppe intérieure lequel est réalisé en utilisant un prépreg en fibres de renforcement imprégnées de résine synthétique et semi-durcies et est collé sur un côté du matériau (11) constituant le noyau; un matériau (13) constituant l'enveloppe extérieure lequel est réalisé en utilisant une pluralité de prépregs en fibres de renforcement imprégnées de résine synthétique et semi-durcies et est collé sur l'autre côté du matériau (11) constituant le noyau, **caractérisée en ce qu'**elle comprend en outre une plaque métallique (14) qui est insérée entre la pluralité de prépregs qui forment le matériau (13) constituant l'enveloppe extérieure.

4. Carrosserie de véhicule monobloc en matériau composite selon la revendication 3 dans laquelle la plaque métallique (14) comprend une pluralité de trous (14a) ménagés dans celle-ci.

5. Procédé destiné à la fabrication d'une carrosserie de véhicule monobloc en matériau composite pour un véhicule de transport qui comprend les étapes suivantes:
un moule correspondant à la forme et aux dimensions de la carrosserie de véhicule est réalisé de manière à pouvoir fabriquer en une seule pièce une partie frontale avant, une partie frontale arrière, une partie-toit et des parties latérales de la carrosserie de véhicule;
un matériau constituant l'enveloppe extérieure, lequel est réalisé en utilisant un prépreg en fibres de renforcement imprégnées de résine synthétique et semi-durcies, est laminé sur la surface intérieure du moule;
une plaque métallique ou une plaque métallique poreuse est laminée sur la surface intérieure du matériau constituant l'enveloppe extérieure;
un matériau constituant le noyau est laminé sur la surface intérieure de la plaque métallique;
un matériau constituant l'enveloppe intérieure, lequel est réalisé en utilisant un prépreg en fibres de renforcement imprégnées de résine synthétique et semi-durcies, est laminé sur la surface intérieure du matériau constituant le noyau; et
les matériaux ci-avant sont, une fois laminés, moulés dans un autoclave.

6. Procédé destiné à la fabrication d'une carrosserie de véhicule monobloc en matériau composite pour un véhicule de transport qui comprend les étapes suivantes:
un moule correspondant à la forme et aux dimensions de la carrosserie de véhicule est réalisé de manière à pouvoir fabriquer en une seule pièce une partie frontale avant, une partie frontale arrière, une partie-toit et des parties latérales de la carrosserie de véhicule;
un premier matériau constituant l'enveloppe extérieure, lequel est réalisé en utilisant un prépreg en fibres de renforcement imprégnées de matériaux de matrice et semi-durcies, est laminé sur la surface intérieure du moule;
une plaque métallique ou une plaque métallique poreuse est laminée sur la surface intérieure du premier matériau constituant l'enveloppe extérieure;
un deuxième matériau constituant l'enveloppe extérieure, lequel est réalisé en utilisant un prépreg en fibres de renforcement imprégnées de résine synthétique et semi-durcies, est laminé sur la surface intérieure du moule;
un matériau constituant le noyau est laminé sur la surface intérieure du deuxième matériau constituant l'enveloppe extérieure;
un matériau constituant l'enveloppe intérieure, lequel est réalisé en utilisant un prépreg en fibres de renforcement imprégnées de résine synthétique et semi-durcies, est laminé sur la surface intérieure du matériau constituant le noyau; et
les matériaux ci-avant sont, une fois laminés, moulés dans un autoclave.
